# EUROPEAN PATENT SPECIFICATION

(11) **EP 2 468 939 B1**
(45) Date of publication and mention of the grant of the patent: **12.02.2014**
(21) Application number: 11195571.2
(22) Date of filing: 23.12.2011
(51) Int. Cl.: D06F 23/04, D06F 37/40

(54) **Washing machine and controlling method thereof**
Waschmaschine und Steuerungsverfahren dafür
Machine à laver et son procédé de commande

(30) Priority: 27.12.2010 KR 20100135854
(43) Date of publication of application: 27.06.2012
(73) Proprietor: LG Electronics Inc., Seoul 150-721 (KR)
(72) Inventor: Chang Jaewon, Seoul 153-023 (KR); Lee, Kyubum, Seoul 153-023 (KR); Kim, Youngjong, Seoul 153-023 (KR); Chae, Aekyung, Seoul 153-023 (KR)
(74) Representative: Vossius & Partner

(56) References cited:
- US-A- 4 837 882
- US-A- 5 551 261
- US-A- 5 586 455
- US-A1- 2003 110 575
- US-A1- 2007 101 772

## Description

The present invention relates to a washing machine and, more particularly, to a washing machine having a buoyancy clutch that operates when wash water is filled in an inner tub and a method of controlling the washing machine.

A washing machine generally refers to various devices for processing the laundry by applying a physical and chemical action to the laundry, such as a laundry machine for detaching a contaminant from the clothes, bedclothes, and the like, (referred to as the 'laundry', hereinafter) by using a chemical decomposition operation between water and a detergent and a physical operation such as friction between water and the laundry.

The related art washing machine includes a pulsator that is rotatably provided in an inner tub in which laundry is loaded. The inner tub and/or pulsator rotate by a motor. Here, rotational force generated by the motor is selectively transferred to the inner tub and/or pulsator by a clutch.

The clutch moves up and down by buoyancy created by the wash water. When the clutch is in an upper position, a driving shaft of the motor is engaged with the pulsator to rotate only the pulsator. When the clutch is in a lower position, the driving shaft of the motor is engaged with both the pulsator and inner tub to rotate the pulsator and inner tub together.

However, the clutch that operates by the buoyancy has a problem in that, since it is always in the upper position when the wash water is filled in the inner tub, it cannot rotates the inner tub when the wash water is filled in the inner tub. When the wash water is filled in the inner tub, the prior art buoyancy clutch can rotate only the pulsator. That is, the clutch is engaged with not only the pulsator but also the inner tub only in a spin cycle that is performed after the wash water is drained out of the inner tub.

In addition, when the clutch is accurately shifted from the upper position to the lower position, the driving shaft of the motor cannot be accurately engaged with the inner tub. When the motor is driven with a high speed in this state, a shaft-engaging portion of the inner tub may be damaged. This results in the deterioration of the durability of the washing machine. Therefore, there is a need for a method for detecting if the clutch operates accurately and, when the clutch inaccurately operates, correcting the inaccurate operation of the clutch.

US 2007/0101772 A1 discloses a laundry machine including: a tub supported within a cabinet; a wash basket supported for rotation within the tub; a wash plate mounted in the lower portion of the wash basket; a shaft for mounting the wash basket and the wash plate for selective rotation; and a motor for driving the shaft. The laundry machine further includes a vertically inter-engaging clutch between the wash basket and wash plate, which can drive either the wash plate independently of the wash basket, or drive the wash plate and wash basket together.

Further, US 5,586,455 discloses a corresponding technology, which relates generally to a clutch mechanism of an automatic washing machine for transmitting power of a drive motor selectively to an agitator in a wash step and a rotatable tub and the agitator in a dehydration step by utilizing buoyancy of water.

Thus, an object of the present invention is to provide a washing machine that is designed to rotate an inner tub by operating a buoyancy clutch even when wash water is filled in the inner tub.

Another object of the present invention is to provide a washing machine that is designed to remove buoyancy acting on a buoyancy clutch even when wash water is filled in the inner tub.

Still another object of the present invention is to provide a method of controlling a washing machine, which can improve operational accuracy of a buoyancy clutch.

According to an aspect of the present invention, there is provided a washing machine including: an outer tub holding wash water; an inner tub rotatably provided in the outer tub and receiving laundry; a pulsator rotatably provided in the inner tub; a power transmission shaft including a first driving shaft rotating the pulsator and a second driving shaft engaged with the inner tub; a buoyancy clutch that is disposed between the pulsator and the outer tub, integrally rotate with the first driving shaft, moves up and down in accordance with buoyancy created by the wash water, is separated from the second driving shaft in an upper position, and is engaged with the second driving shaft in a lower position to allow the pulsator to rotate together with the inner tub; a circulation passage allowing the wash water drained out of the outer tub to be returned into the outer tub; a pump provided on the circulation passage; a hub that is disposed between the buoyancy clutch and the outer tub, coupled to the second driving shaft to support the inner tub, disposed under the buoyancy clutch, and provided with a plurality of through holes; and a passage guide that is disposed between the hub and the outer tub to direct the wash water drained through the through holes formed on the hub to a drain hole of the outer tub, the drain hole being connected to the circulation passage.

According to another aspect of the present invention, there is provided a method of controlling a washing machine including an inner tub, an outer tub, a motor, a first driving shaft rotating by the motor, a second driving shaft, and a buoyancy clutch that integrally rotates with the first driving shaft, moves up and down along the first driving shaft by buoyancy creased by the wash water, and is engaged with the second driving shaft in a lower position of the buoyancy clutch to rotate the inner tub, the method including: alternately rotating the motor in both direction in a state where the wash water is filled in the inner tub; stopping the motor and operating the pump provided on the circulation passage; continuously driving the motor in one direction during the operation of the pump; and alternately rotating the motor in the both direction on the basis of a detection value of a driving detecting unit for detecting a driving state of the motor.

According to the aspects, even when the wash water is filled in the inner tub, the buoyancy clutch can operate to rotate the inner tub.

Since the buoyancy clutch is provided in the outer tub, the space between the cabinet and the outer tub can be increased as compared with the prior art washing machine in which a clutch unit is provided at an outer side of the outer tub, thereby increasing the volume of the outer tub.

Since both the driving for rotating only the pulsator and the driving for integrally rotating the pulsator and the inner tub can be performed in the rinse and wash cycles, the washing pattern can be variously realized.

In addition, the operating accuracy of the buoyancy clutch can be improved.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view of a washing machine according to an exemplary embodiment of the present invention;
FIG. 2 is a schematic view of a circulation passage and a pump of the washing machine of FIG. 1;
FIG. 3A and 3B are enlarged views of a portion A of FIG. 1, in which FIG. 3A illustrates a state where a buoyancy clutch is in an upper position and FIG. 3B illustrates a state where the buoyancy clutch is in a lower position;
FIG. 4 is an exploded perspective view illustrating a buoyancy clutch, a hub, and a passage guide that are illustrated in FIGS. 3A and 3B;
FIG. 5A is a schematic view illustrating a centrifugal circulation water stream;
FIG. 5B is a schematic view illustrating a pressurized water stream;
FIG. 6 is a block diagram illustrating a control relationship between major parts of the washing machine according to an exemplary embodiment of the present invention; and
FIG. 7 is a flowchart of a washing machine control method according to an exemplary embodiment of the present invention.

The foregoing and other objects, features, aspects and advantages of the present invention will become more apparent from the following detailed description of the present invention when taken in conjunction with the accompanying drawings. Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

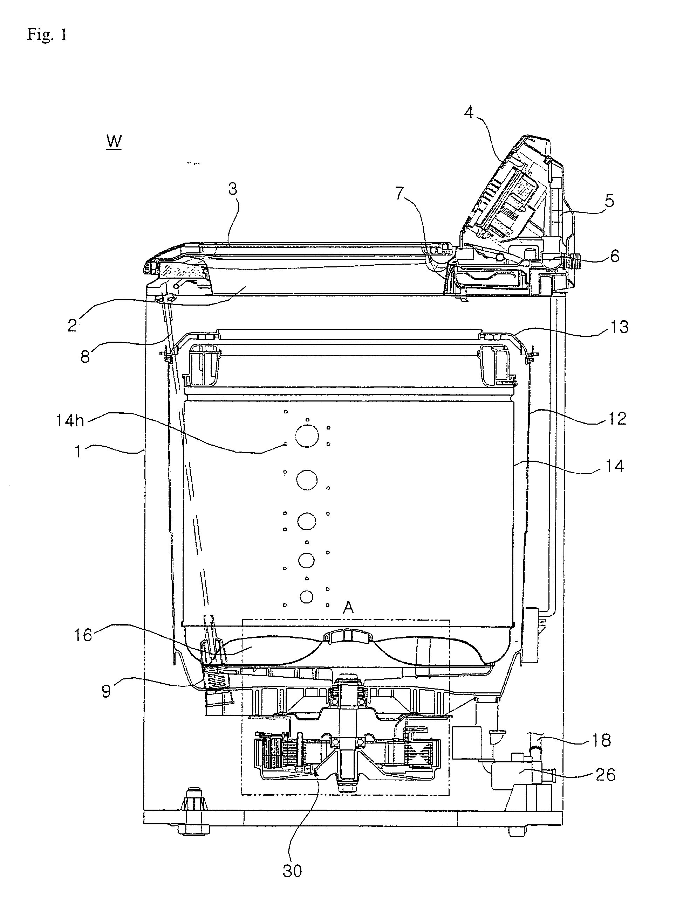

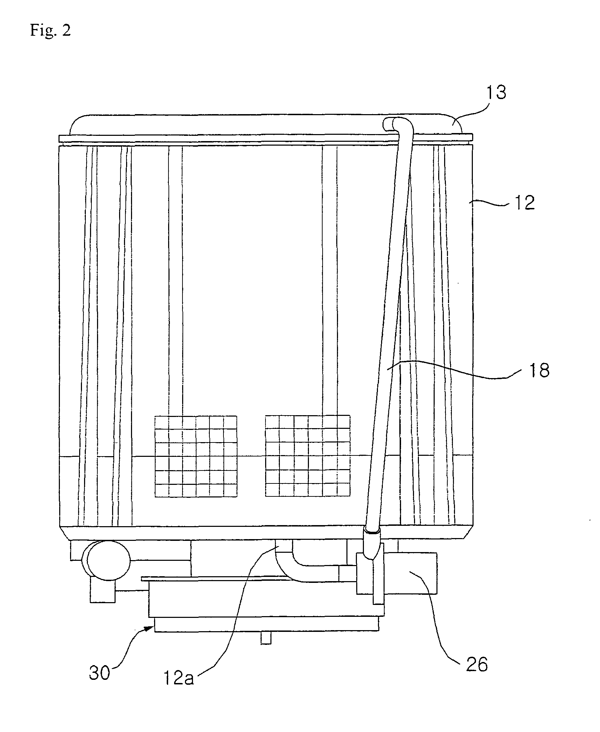

FIG. 1 is a schematic view of a washing machine according to an exemplary embodiment of the present invention and FIG. 2 is a schematic view of a circulation passage and a pump of the washing machine of FIG. 1.

Referring to FIG. 1, a washing machine W according to an exemplary embodiment of the present invention includes a cabinet 1, a top cover 2 disposed on a top of the cabinet1 and provided with a laundry loading hole through which the laundry is loaded and unloaded, a door 3 that is coupled to the top cover 2 to open and close the laundry loading hole, and a control panel 4 providing a user interface for allowing a user to input a variety of control commands and displaying operational information of the washing machine W.

An outer tub 12 is suspended in the cabinet 1 by a supporting member 8. The supporting member 8 is connected to the outer tub 12 by a suspension 9 to attenuate vibration generated during washing. An inner tub 14 is rotatably disposed in the outer tub 12.

The water is supplied from an external water source into the outer and inner tubs 12 and 14 through a water supply passage 5 via a washing aid box 7. Various washing aid agents such as detergent, softener, whitener, and/or the like are stored in the washing aid box 7. The washing aid agents are mixed with the water and supplied into the outer and inner tubs 12 and 14. Therefore, hereinafter, "wash water" may be defined as any one of water and water mixed with the washing aid agents.

An outer tub cover 13 is provided on a top of the outer tub 12. The outer tub cover 13 is formed in a ring-shape having a central opening through which the laundry is loaded and unloaded. The outer tub over 13 prevents the wash water from scattering into the outer tub 12 and guides the wash water, which ascends along a space between the outer and inner tubs 12 and 14 when centrifugal circulation water stream is formed, to be poured into the inner tub 14 along a rear surface of the outer tub cover 13.

The wash water flows into the space defined between the outer and inner tubs 12 and 14 through a plurality of through holes 14h formed through the inner tub 14.

A pulsator 16 is rotatably provided on a lower portion of the inner tub 14. Dirty is removed from the laundry by mechanical force that is created by the rotation of the pulsator 16 and acts on the laundry.

A driving unit 30 may be classified into a direct driving type and an indirect driving type in accordance with a method for transferring the rotational force of the motor 22 to the pulsator 16 and the inner tub 14. In this exemplary embodiment, the direct driving type in which the rotational shaft of the motor is coaxially engaged with the inner tub and the pulsator. However, the present invention is not limited to this type. The indirect driving type in which the rotational force is transferred through a power transmission unit such as a belt or pulley may be also possible.

The washing machine further includes a pump 26. The pump 26 is designed to drain the wash water out of the outer tub 12. In this exemplary embodiment, the pump 26 is described as a circulation/drain pump that circulates the wash water drained from the outer tub 12 through the circulation passage 18 or drains the wash water out of the washing machine W. However, the present invention is not limited to this. For example, a drain pump for draining the wash water drained from the outer tub 12 out of the washing machine W and a circulation pump for circulating the wash water drained from the outer tub 12 through the circulation passage 18 are provided.

The pump 26 may drain the wash water drained from the outer tub 12 out of the washing machine W through a drain passage (not shown) by proper passage change. However, in this exemplary embodiment, only a function where the wash water drained from the outer tub 12 is pumped by the pump 26 and returned to the outer tub 12 through the circulation passage 18 will be described.

In the washing machine of this exemplary embodiment, it is enough that the circulation passage is designed to guide the wash water drained from the outer tub 12 to be returned to the outer tub 12. This may be realized through a variety of ways. FIG. 2 illustrates the circulation passage according to an exemplary embodiment of the present invention. Here, the circulation passage 18 has a first end connected to a drain pipe 12a formed on a bottom of the outer tub 12 and extending upward through a space defined between the cabinet 1 and the outer tub 12 and a second end connected to the outer tub cover 13. The pump 26 is provided on the circulation passage 26 to pump the wash water.

When the pump 26 operates, the wash water in the outer tub 12 is drained to the circulation passage 18 through the drain pipe 12a and directed toward the outer cover 13 along the circulation passage 18, after which the wash water is sprayed into the outer tub 12 or the inner tub 14. Here, a nozzle (not shown) for spraying the wash water supplied through the circulation passage 18 toward the laundry loaded in the inner tub 14 may be provided on the outer tub cover 13.

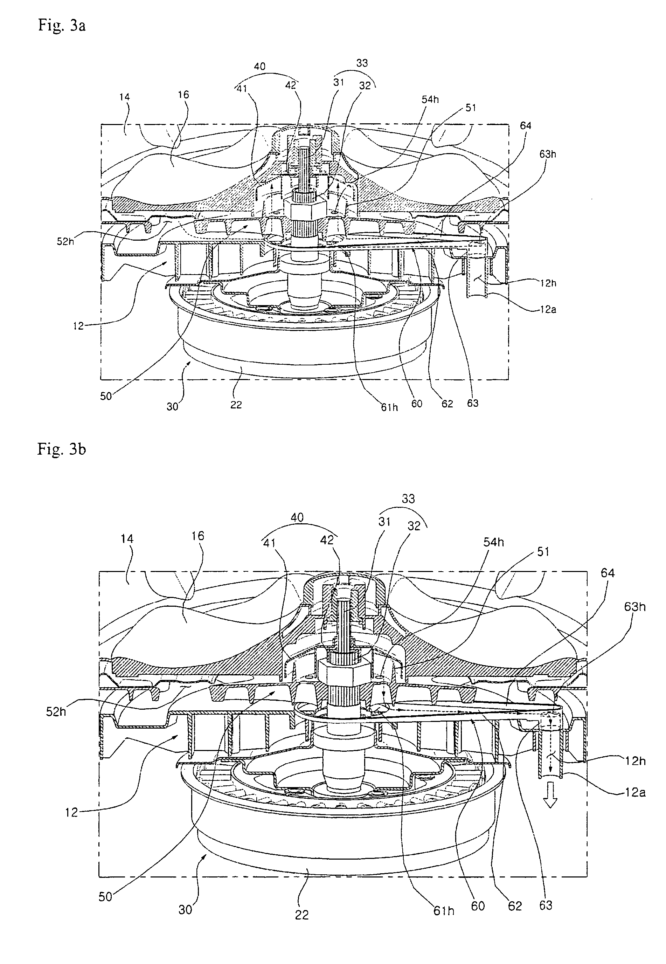

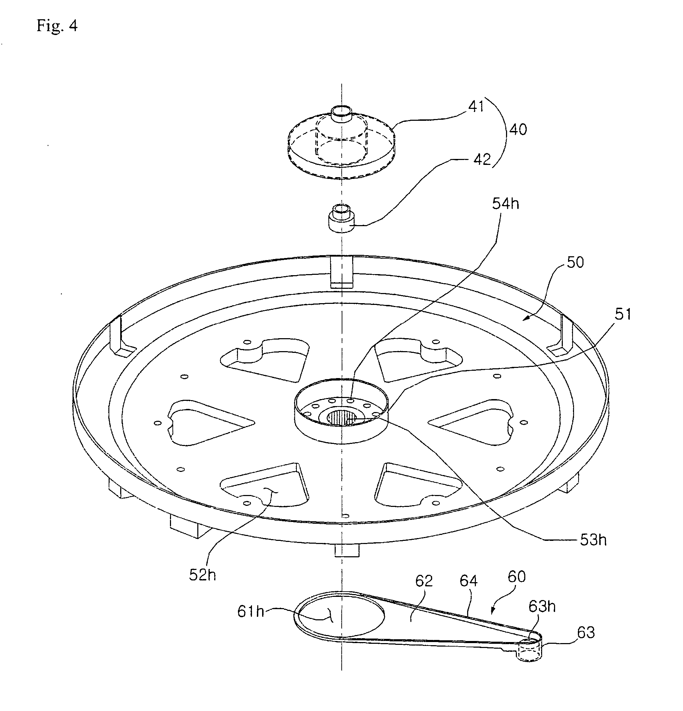

FIG. 3A and 3B are enlarged views of a portion A of FIG. 1, in which FIG. 3A illustrates a state where a buoyancy clutch is in an upper position and FIG. 3B illustrates a state where the buoyancy clutch is in a lower position. FIG. 4 is an exploded perspective view illustrating a buoyancy clutch, a hub, and a passage guide that are illustrated in FIGS. 3A and 3B.

As shown in FIGS. 3A, 3B, and 4, the driving unit 30 of the washing machine W includes a motor 22 and a power transmission shaft 33.

The power transmission shaft 33 transfers the rotation force created by the motor 22 to the pulsator 16 and/or the inner tub 14. The power transmission shaft 33 includes a first driving shaft 31 rotating the pulsator 16 and a second driving shaft 32 rotating the inner tub 14.

The first and second driving shafts 31 and 32 are coaxially arranged and have different diameters. In this exemplary embodiment, the second driving shaft is a hollow shaft having an inner diameter greater than an outer diameter of the first driving shaft 31 so that the first driving shaft 31 is inserted in the second driving shaft 32.

The first driving shaft 31 is coupled to the pulsator 16 to integrally rotate with the pulsator 16.

Meanwhile, the inner tub 14 is supported by a hub 50 that is coupled to the second driving shaft 32. The second driving shaft 32 passes through a coupling hole 53h formed through the hub 50. A serration is formed on an outer circumference of the second driving shaft 32. A serration that is engaged with the serration formed on the second driving shaft 32 is formed on an inner circumference of the coupling hole 53h of the hub 50. Therefore, when the second driving shaft 32 rotates, the hub 50 rotates together with the second driving shaft 32.

As shown in FIGS. 3A and 3B, the hub 50 is disposed between the pulsator 16 and the outer tub 12. The hub 50 is provided with a plurality of holes 52h formed along a line extending in a circumferential direction so that the wash water in the inner tub 14 can be directed into the outer tub 12.

A buoyancy clutch 40 is inserted into the power transmission shaft 33 and disposed between the pulsator 16 and the hub 50. The buoyancy clutch 40 moves up and down by buoyancy created by the wash water. When the wash water is supplied to a space under the buoyancy clutch 40, the buoyancy clutch 40 moves upward by the buoyancy created by the wash water. When the wash water under the buoyancy clutch 40 is drained, the buoyancy is removed and thus the buoyancy clutch 40 moves downward.

In more detail, the hub 50 is provided with a barrier 51 that is formed along the circumference of the coupling hole 53h through which the power transmission shaft 33 passes. The buoyancy clutch 40 is disposed to enclose the barrier 51 and moves upward by the buoyancy creased by the wash water introduced into the barrier 51.

Meanwhile, the hub 50 is provided with a through hole 54h that is formed through an portion surrounded by the barrier 51. A plurality of the through holes 54h may be formed along the circumference of the coupling hole 53h. When the wash water is introduced into the buoyancy clutch 40 through the through hole 54h, the buoyancy clutch 40 moves upward. On the other hand, when the wash water is drained to the outer tub 12 through the through hole 54h, the buoyancy acting on the buoyancy clutch 40 is released and thus the buoyancy clutch 40 moves downward.

The buoyancy clutch 40 includes a floater 41 that moves up and down along the power transmission shaft 33 by the buoyancy created by the wash water and a second driving shaft engaging portion 42 that is engaged with the second driving shaft 32 when the buoyancy clutch is in a lower position. In this exemplary embodiment, although the floater 41 and the second driving shaft engaging portion 42 are provided as separated parts, they may be integrally formed with each other.

Meanwhile, the washing machine W further includes a drain guide portion that directs the wash water under the buoyancy clutch 40 toward the drain hole 12h formed on the outer tub 12 such that the buoyancy clutch 40 moves downward.

The drain guide portion, when the pump 26 operates, generates a relatively stronger water stream from the portion under the buoyancy clutch 40 toward the outer tub 12 so that the wash water under the buoyancy clutch 40 can be quickly drained toward the circulation passage 18. To this end, the drain guide portion forms a passage extending from a portion under the buoyancy clutch 40 toward the drain hole 12h of the outer tub 12.

The drain guide portion includes a plurality of through holes 54h formed on the hub 50 and a passage guide 60 for directing the wash water drained through the through holes 54 toward the drain hole 12h.

The passage guide 60 is formed between the outer tub 12 and the hub 50. The passage guide 60 is for directing the wash water drained to the outer tub 12 through the through holes 54h formed on the hub 50 toward the drain pipe 12a formed on the outer tub 12. The passage guide 60 is provided at a first end with an opening 61h through which the power transmission shaft 33 passes and at a second end with a drain pipe connecting portion 63 connected to the drain pipe 12a formed on the outer tub 12.

An inner diameter of the opening 61h of the passage guide 60 is greater than an outer diameter of the power transmission shaft 33. Accordingly, the inner circumference of the opening 61h is spaced apart from the power transmission shaft 33, thereby preventing the power transmission shaft 33 from interfering with the passage guide 60 when the power transmission shaft 33 rotates.

The passage guide 60 is provided with a guide surface 62 extending from the opening 61h to the drain pipe connecting portion 63 and a rid 64 extends along an edge of the guide surface 62. The drain pipe connecting portion 63 protrudes downward from a circumference of the drain hole 63h formed on the guide surface 62. A width of the passage on the guide surface 62 is gradually reduced from the opening 61h toward the drain pipe connecting portion 63. Accordingly, when the pump 26 operates, a water pressure gradient is formed between the opening 61h and the drain pipe connecting portion 63 and thus the tendency for directing the wash water from the opening 61h toward the drain pipe connecting portion 63 is intensified.

When the pump 26 operates, the wash water is drained from the outer tub 12 to the circulation passage 18 through the drain hole 12h. At this point, the water stream flowing toward the drain pipe connecting portion 63 along the guide surface 62 is intensified by suction created by the pump 26. Especially, since the rib 64 formed along the guide surface 62 further intensifies the flow of the washing water, the tendency where the washing water collected between the hub 50 and the buoyancy clutch 40 is drained to the outer tub 12 through the through hole 54h is intensified, the buoyancy clutch 40 may move downward even when the wash water is filled in the inner tub 14.

A mechanical operation for moving the buoyancy clutch 40 upward will be described in more detail with reference to FIG. 3A.

When the wash water is supplied, the water level of the outer tub 12 gradually increases and the water is directed into the space under the buoyancy clutch 40 through the through hole 54h of the hub 50. This flowing of the wash water is indicated by dotted-arrow in FIG. 3A. As the wash water is supplied under the buoyancy clutch 40, the buoyancy clutch 40 moves upward and thus the second driving shaft engaging portion 42 is separated from the second driving shaft 32. Accordingly, when the motor 22 is driven, only the pulsator 16 rotates.

A mechanical operation for shifting the buoyancy clutch 40 from the upper position to the lower position will be described in more detail with reference to FIG. 3B.

When the pump operates, the wash water collected under the buoyancy clutch 40 is drained to the outer tub 12 through the through hole 54h of the hub50. The drained wash water is directed to the drain pipe 12a by the passage guide 60. At this point, the guide surface 62 of the passage guide 60 and the rib 64 intensify the water stream of the wash water that is drained through the through hole 54h of the hub 50 and is directed to the drain pipe connecting portion 63. Accordingly, the wash water between the buoyancy clutch 40 and the hub 50 is effectively drained to the outer tub 12 through the through hole 54h of the hub. This flowing of the wash water is indicated by dotted-arrow in FIG. 3B.

As the wash water collected under the buoyancy clutch 40 is drained to the outer tub 12, the buoyancy acting on the buoyancy clutch 40 is removed and thus the buoyancy clutch 40 moves downward. As a result, the second driving shaft engaging portion 42 is engaged with the second driving shaft 32. Therefore, the pulsator 16 and the inner tub 14 rotate together. Here, the second driving shaft engaging portion 42 is provided at an inner circumference thereof with a serration engaged with the serration of the second driving shaft 32.

Meanwhile, the wash water drained through the drain pipe 12a flows along the circulation passage 18 and is poured into the inner tub 14. Therefore, the inner tub 14 remains a state where the wash water is always filled in the same.

The washing machine W according to the exemplary embodiment of the present invention is designed, even when the wash water is filled in the inner tub 14 by forcedly lowering the buoyancy clutch 40 by operating the pump 26. Accordingly, in wash and rinse cycles that are preformed in a state where the wash water is filled in the inner tub 14, both a process for treating the laundry by rotating only the pulsator 16 and a process for treating the laundry by rotating both the pulsator 16 and the inner tub 14 together can be performed.

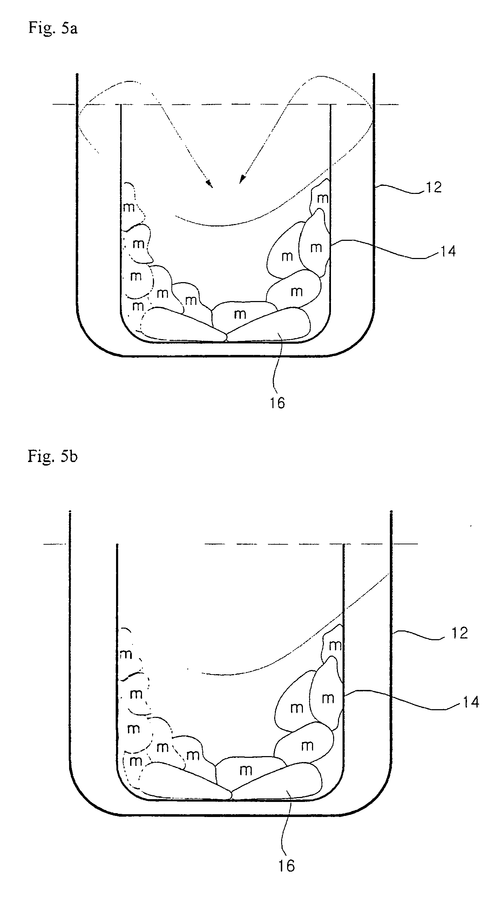

For example, in a state where the wash water is filled in the inner tub 14, the controller 10 alternately drives in both directions to rotate the pulsator 16, after which the controller 10 operates the pump 26 to drain the wash water collected under the buoyancy clutch 40 to the outer tub 12 so that the buoyancy clutch 40 is in the lower position, thereby rotating the pulsator 16 together with the inner tub 14. Here, describing the water streams formed during the rotation of the pulsator 16 and the inner tub 14, there are a centrifugal circulation water stream shown in FIG. 5A and a pressurized water stream shown in FIG. 5B.

Referring to FIG. 5A, the centrifugal circulation water stream is a stream in which the wash water between the outer and inner tubs 12 and 14 moves upward by the centrifugal force created by the rotation of the inner tub 14 and is poured into the inner tub 14. At this point, the laundry m is adhered to an inner wall of the inner tub 14 by the centrifugal force.

Referring to FIG. 5B, the pressurized water stream between the outer and inner tubs 12 and 14 is a stream in which the wash water moves upward by the centrifugal force created by the rotation of the inner tub 14 but does not flow over the inner tub. At this point, the laundry m is adhered to the inner wall of the inner tub 14.

By the centrifugal circulation water stream or the pressurized water stream, the wash water flows into the outer tub 12 through the through hole 14h and passes through the laundry m. Therefore, the laundry m can sufficiently absorb the washing aid agents. Particularly, by the centrifugal circulation water stream, a tap washing effect can be attained by the wash water poured into the inner tub 14.

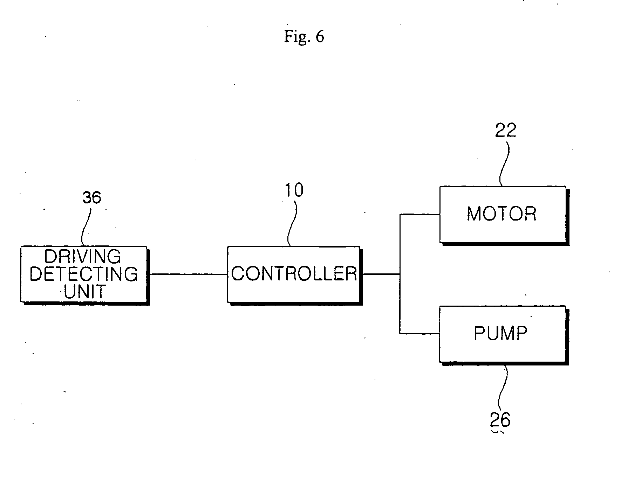

FIG. 6 is a block diagram illustrating a control relationship between major parts of the washing machine according to an exemplary embodiment of the present invention. Referring to FIG. 6, the washing machine may further include a driving detecting unit 36.

The driving detecting unit 36 detects the driving state of the motor 22 through an RPM, a rotation cycle, or an output current variation of the motor 22.

The controller 10 determines if only the pulsator 16 rotates or the pulsator 16 rotates together with the inner tub 14 on the basis of the driving state of the motor 22 detected by the driving detecting unit 36.

For example, the driving detecting unit 36 may use a hall sensor. In this case, the driving detecting unit 36 may determine if only the pulsator 16 rotates or the pulsator 16 rotates together with the inner tub 14 on the basis of the rotation cycle of the motor 22, which is detected by the hall sensor.

Even if the driving of the motor is controlled with the same RPM, the loads applied to the motor 22 in a case where only the pulsator 16 rotates and in a case where the pulsator 16 rotates together with the inner tub 14 may be different from each other. Therefore, the rotation cycles in the cases are different from each other. The controller 10 may determine, on the basis of this difference, if only the pulsator 16 rotates or the pulsator 16 rotates together with the inner tub 14.

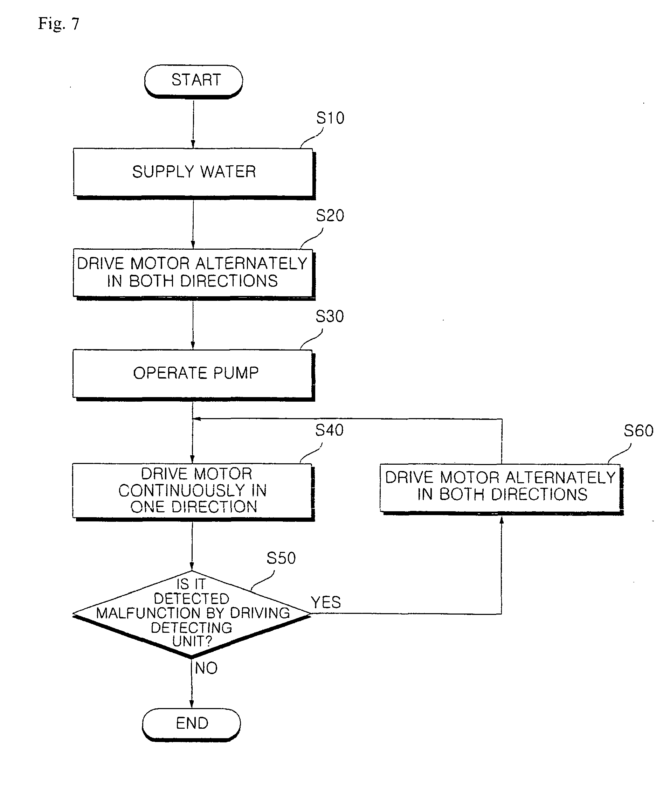

FIG. 7 is a flowchart of a washing machine control method according to an exemplary embodiment of the present invention. Referring to FIG. 7, wash water is supplied into the inner and outer tubs 14 and 12 (S10). The controller 10 opens a water supply valve 6 to supply the wash water through the water supply passage 5. When the water level of the outer tub 12 reaches a predetermined level, the controller 10 closes the water supply valve. The wash water is supplied to a space under the buoyancy clutch 40 is supplied and thus the buoyancy clutch 40 moves to the upper position by the buoyancy created by the wash water. As a result, the buoyancy clutch 40 is separated from the second driving shaft 32.

When the supply of the wash water is completed, the controller alternately rotates the motor 22 in both directions (S20). Since the buoyancy clutch 40 is separated from the second driving shaft 32, only the pulsator 16 alternately rotates in the both directions. The laundry is treated by the frictional force between the pulsator 16 and the laundry and the agitating water stream formed by the pulsator 16.

After the above, the controller 10 stops the motor 22 temporarily and operates the pump 26 (S30). As the pump 26 operates, the wash water collected under the buoyancy clutch 40 is drained to the outer tub 12 through the through hole 54h of the hub 50 to release the buoyancy acting on the buoyancy clutch 40. Accordingly, the buoyancy clutch 40 moves downward by the gravity and thus the second driving shaft engaging portion 42 is engaged with the second driving shaft 32.

Next, the controller 10 drives continuously the motor in one direction (S40). In Step S30, if the second driving shaft engaging portion 42 is accurately engaged with the second driving shaft 32, the pulsator 16 and the inner tub 14 rotate together with each other after Step S40. If not, only the pulsator 16 will still rotate.

In Step S50, it is determined if the buoyancy clutch 40 accurately operates in Step S30 and thus the driving shaft engaging portion 42 is accurately engaged with the second driving shaft 32. The controller 10, as described above, determines if only the pulsator 16 rotates or the pulsator 16 rotates together with the inner tub 14 in accordance with the detecting value of the driving detecting unit 36.

Here, when it is determined that the pulsator 16 and the inner tub 14 integrally rotate together with each other, it is determined that the buoyancy clutch 40 normally operates in Step S30. When it is determined that only the pulsator 16 rotates, Step S60 is performed as it is case where the buoyancy clutch 40 abnormally operates in Step S30.

When the buoyancy clutch 40 abnormally operates, it can be assumed that the second driving shaft engaging portion 42 is not accurately engaged with the second driving shaft 32 and thus the buoyancy clutch 40 is not accurately lowered.

In Step 60, a process for allowing the second driving shaft engaging portion 42 to be accurately engaged with the second driving shaft 32 is performed. The controller 10 alternately rotates the motor 32 in the both direction. As the buoyancy clutch 40 rotates in the both direction, the second driving shaft engaging portion 42 moves to a correct position relative to the second driving shaft 32 and thus the second driving shaft engaging portion 42 is accurately engaged with the second driving shaft 32.

Then, the process is returned to Step S40 to operate the motor 22 and repeat the Step S50.

Meanwhile, In Steps S40, S50, and the like, the pump may keep operating to maintain the lower position of the buoyancy clutch 40.

## Claims

1. A washing machine comprising:
an outer tub (12) holding wash water;
an inner tub (14) rotatably provided in the outer tub and receiving laundry;
a pulsator (16) rotatably provided in the inner tub;
a power transmission shaft (33) comprising a first driving shaft (31) rotating the pulsator and a second driving shaft (32) engaged with the inner tub;
a buoyancy clutch (40) that is disposed between the pulsator and the outer tub, integrally rotate with the first driving shaft (31), moves up and down in accordance with buoyancy created by the wash water, is separated from the second driving shaft (32) in an upper position, and is engaged with the second driving shaft (32) in a lower position to allow the pulsator to rotate together with the inner tub;
a circulation passage (18) allowing the wash water drained out of the outer tub to be returned into the outer tub;
a pump (26) provided on the circulation passage; the washing machine is **characterized in that** it further comprises
a hub (50) that is disposed between the buoyancy clutch (40) and the outer tub (12), coupled to the second driving shaft (32) to support the inner tub (14), disposed under the buoyancy clutch (40), and provided with a plurality of through holes (54h); and
a passage guide (60) that is disposed between the hub (50) and the outer tub (12) to direct the wash water drained through the through holes (54h) formed on the hub to a drain hole (12h) of the outer tub (12), the drain hole being connected to the circulation passage (18).

2. The washing machine of claim 1, wherein the hub (50) is provided with a barrier (51) for storing the wash water under the buoyancy clutch and the through holes are formed through a bottom surrounded by the barrier.

3. The washing machine of claim 1 or 2, wherein the passage guide (60) is provided with an opening (61h) through which the power transmission shaft passes and the opening is spaced apart from the power transmission shaft so as not to interfere with the power transmission shaft.

4. The washing machine of claim 3, wherein the passage guide (60) has a passage width that is gradually reduced from the opening to the drain hole formed on the outer tub.

5. The washing machine of any one of claims 1 to 4, further comprising a rib (64) formed along a circumference of the passage guide.

6. The washing machine of any one of claims 1 to 5, further comprising a motor (22) rotating the power transmission shaft and a controller (10) that controls the pump such that the pump operates to lower the buoyancy clutch and controls the motor such that the motor continuously rotates in one direction during the operation of the pump.

7. The washing machine of claim 6, wherein the controller (10) controls rotation of the inner tub such that the wash water flows along a space between the inner and outer tub to a level higher than an upper end of the inner tub.

8. The washing machine of claim 6, further comprising a driving detecting unit (36) for detecting a driving state of the motor, wherein the controller (10) controls the motor such that the motor alternately rotates in both directions based on a detection value of the driving detecting unit during the operation of the pump.

9. The washing machine of any one of claims 1 to 8, wherein the first and second driving shafts (31, 32) are coaxially aligned and have different outer diameters, wherein the buoyancy clutch (40) comprises a floater (41) that moves up and down along the first driving shaft and a second driving shaft engaging portion (42) that engages with the second driving shaft when the floater is in a lower position.

10. A method of controlling a washing machine comprising an inner tub (14), an outer tub (12), a pulsator (16), a motor (22), a pump (26) for circulating or draining wash water, a first driving shaft (31) for rotating the pulsator by the motor, a second driving shaft (32) for rotating the inner tub, and a buoyancy clutch (40) that integrally rotates with the first driving shaft, moves up and down along the first driving shaft by buoyancy created by the wash water, and is engaged with the second driving shaft in a lower position of the buoyancy clutch to rotate the inner tub, the method is **characterized by** comprising:
alternately rotating the motor (22) in both directions in a state where the wash water is filled in the inner tub;
stopping the motor and draining wash water under the buoyancy clutch by the pump (26) to move the buoyancy clutch to said lower position;
continuously driving the motor (22) in one direction during the operation of the pump (26); and
alternately rotating the motor (22) in the both directions on the basis of a detection value of a driving detecting unit (36) for detecting a driving state of the motor.

11. The method of claim 10, wherein the motor (22) alternately rotates in both directions based on a rotation cycle of the motor, which is detected by the driving detecting unit (36).

12. The method of claim 10, wherein the motor (22) alternately rotates in both directions based on an RPM of the motor, which is detected by the driving detecting unit (36).

13. The method of claim 10, wherein the motor (22) alternately rotates in both directions based on a variation value of an output current of the motor, which is detected by the driving detecting unit (36).

14. The method of claim 10, wherein the continuously driving the motor comprises controlling an RPM of the motor such that the wash water flows upward between the outer and inner tubs to a level higher than an upper end of the inner tub.

## Patentansprüche

1. Waschmaschine, die aufweist:
einen äußeren Laugenbehälter (12), der Waschwasser aufnimmt,
einen inneren Laugenbehälter (14), der drehbar in dem äußeren Laugenbehälter bereitgestellt ist und Wäsche aufnimmt;
einen Pulsator (16), der drehbar in dem inneren Laugenbehälter bereitgestellt ist;
eine Leistungsübertragungswelle (33), die eine erste Antriebswelle (31), die den Pulsator dreht, und eine zweite Antriebswelle (32), die mit dem inneren Laugenbehälter in Eingriff ist, aufweist;
eine Auftriebskupplung (40), die zwischen dem Pulsator und dem äußeren Laugenbehälter angeordnet ist, integral mit der ersten Antriebswelle (31) rotiert, sich gemäß dem von dem Waschwasser erzeugten Auftrieb auf und ab bewegt, in einer oberen Position von der zweiten Antriebswelle (32) getrennt wird und in einer unteren Position mit der zweiten Antriebswelle (32) in Eingriff gebracht wird, um dem Pulsator zu ermöglichen, zusammen mit dem inneren Laugenbehälter zu rotieren;
einen Zirkulationsdurchgang (18), der ermöglicht, dass Wasser aus dem äußeren Laugenbehälter abgelassen wird, um in den äußeren Laugenbehälter zurückgeführt zu werden;
eine Pumpe (26), die auf dem Zirkulationsdurchgang bereitgestellt ist, wobei die Waschmaschine **dadurch gekennzeichnet ist, dass** sie ferner aufweist:
eine Nabe (50), die zwischen der Auftriebskupplung (40) und dem äußeren Laugenbehälter (12) angeordnet ist, die mit der zweiten Antriebswelle (32) verbunden ist, um den inneren Laugenbehälter (14) zu halten, die unter der Auftriebskupplung (40) angeordnet ist und mit einer Vielzahl von Durchgangslöchern (54h) versehen ist; und
eine Durchgangsführung (60), die zwischen der Nabe (50) und dem äußeren Laugenbehälter (12) angeordnet ist, um das durch die auf der Nabe ausgebildeten Durchgangslöcher (54h) abgeleitete Waschwasser zu einem Ableitloch (12h) des äußeren Laugenbehälters (12) zu leiten, wobei das Ableitloch mit dem Zirkulationsdurchgang (18) verbunden ist.

2. Waschmaschine nach Anspruch 1, wobei die Nabe (50) mit einer Sperre (51) zum Lagern des Waschwassers unter der Auftriebskupplung versehen ist und die Durchgangslöcher durch einen von der Sperre umgebenen Boden ausgebildet sind.

3. Waschmaschine nach Anspruch 1 oder 2, wobei die Durchgangsführung (60) mit einer Öffnung (61h) versehen ist, durch welche die Leistungsübertragungswelle geht, und die Öffnung von der Leistungsübertragungswelle beabstandet ist, um sich nicht mit der Leistungsübertragungswelle zu stören.

4. Waschmaschine nach Anspruch 3, wobei die Durchgangsführung (60) eine Durchgangsbreite hat, die von der Öffnung zu dem auf dem äußeren Laugenbehälter ausgebildeten Ableitloch allmählich verkleinert wird.

5. Waschmaschine nach einem der Ansprüche 1 bis 4, die ferner eine Rippe (64) aufweist, die entlang eines Umfangs der Durchgangsführung ausgebildet ist.

6. Waschmaschine nach einem der Ansprüche 1 bis 5, die ferner einen Motor (22), der die Leistungsübertragungswelle rotiert, und eine Steuerung (10) aufweist, die die Pumpe derart steuert, dass die Pumpe arbeitet, um die Auftriebskupplung zu senken, und den Motor derart steuert, dass der Motor während des Betriebs der Pumpe kontinuierlich in eine Richtung rotiert.

7. Waschmaschine nach Anspruch 6, wobei die Steuerung (10) die Rotation des inneren Laugenbehälters derart steuert, dass das Waschwasser entlang eines Raums zwischen dem inneren und äußeren Laugenbehälter auf einen höheren Pegel als ein oberes Ende des inneren Laugenbehälters strömt.

8. Waschmaschine nach Anspruch 6, die ferner eine Antriebserfassungseinheit (36) zum Erfassen eines Antriebszustands des Motors aufweist, wobei die Steuerung (10) den Motor während des Betriebs der Pumpe basierend auf einem Erfassungswert der Antriebserfassungseinheit derart steuert, dass der Motor abwechselnd in beide Richtungen rotiert.

9. Waschmaschine nach einem der Ansprüche 1 bis 8, wobei die erste und zweite Antriebswelle (31, 32) koaxial ausgerichtet sind und verschiedene Außendurchmesser haben, wobei die Auftriebskupplung (40) einen Schwimmer (41), der sich entlang der ersten Antriebswelle auf und ab bewegt, und einen zweiten Welleneingreifabschnitt (42) aufweist, der mit der zweiten Antriebswelle eingreift, wenn der Schwimmer in einer unteren Position ist.

10. Verfahren zum Steuern einer Waschmaschine, die aufweist: einen inneren Laugenbehälter (14), einen äußeren Laugenbehälter (12), einen Pulsator (16), einen Motor (22), eine Pumpe (26) zum Zirkulieren oder Ableiten von Waschwasser, eine erste Antriebswelle (31) zum Rotieren des Pulsators durch den Motor, eine zweite Antriebswelle (32) zum Rotieren des inneren Laugenbehälters und eine Auftriebskupplung (40), die integral mit der ersten Antriebswelle rotiert, sich durch den von dem Waschwasser erzeugten Auftrieb entlang der ersten Antriebswelle auf und ab bewegt und in einer unteren Position der Auftriebskupplung mit der zweiten Antriebswelle in Eingriff ist, um den inneren Laugenbehälter zu rotieren, wobei das Verfahren **dadurch gekennzeichnet ist, dass** es aufweist:
in einem Zustand, in dem das Waschwasser in den inneren Laugenbehälter gefüllt ist, abwechselndes Rotieren des Motors (22) in beide Richtungen;
Stoppen des Motors und Ableiten des Waschwassers unter der Auftriebskupplung durch die Pumpe (26), um die Auftriebskupplung zu der unteren Position zu bewegen;
während des Betriebs der Pumpe (26) kontinuierliches Antreiben des Motors (22) in eine Richtung; und
auf der Basis eines Erfassungswerts einer Antriebserfassungseinheit (36) zum Erfassen eines Antriebszustands des Motors abwechselndes Rotieren des Motors (22) in die beiden Richtungen.

11. Verfahren nach Anspruch 10, wobei der Motor (22) basierend auf einem Rotationszyklus des Motors, der von der Antriebserfassungseinheit (36) erfasst wird, abwechselnd in beide Richtungen rotiert.

12. Verfahren nach Anspruch 10, wobei der Motor (22) basierend auf der Drehzahl des Motors, die von der Antriebserfassungseinheit (36) erfasst wird, abwechselnd in beide Richtungen rotiert.

13. Verfahren nach Anspruch 10, wobei der Motor (22) basierend auf einem Abweichungswert eines Ausgangsstroms des Motors, der von der Antriebserfassungseinheit (36) erfasst wird, abwechselnd in beide Richtungen rotiert.

14. Verfahren nach Anspruch 10, wobei das kontinuierliche Antreiben des Motors das Steuern einer Drehzahl des Motors derart aufweist, dass das Waschwasser zwischen den äußeren und inneren Laugenbehältern auf einen Pegel aufwärts strömt, der höher als ein oberes Ende des inneren Laugenbehälters ist.

## Revendications

1. Machine à laver, comprenant :
une cuve extérieure (12) contenant de l'eau de lavage ;
une cuve intérieure (14) prévue de façon rotative dans la cuve extérieure et recevant du linge ;
un pulsateur (16) prévu de façon rotative dans la cuve intérieure ;
un arbre de transmission de puissance (33) comprenant un premier arbre d'entraînement (31) faisant tourner le pulsateur et un deuxième arbre d'entraînement (32) en prise avec la cuve intérieure ;
un embrayage à flottabilité (40) qui est disposé entre le pulsateur et la cuve extérieure, tourne d'un seul tenant avec le premier arbre d'entraînement (31), se déplace vers le haut et vers le bas conformément à une flottabilité créée par l'eau de lavage, est séparé du deuxième arbre d'entraînement (32) dans une position supérieure, et est en prise avec le deuxième arbre d'entraînement (32) dans une position inférieure pour permettre au pulsateur de tourner conjointement avec la cuve intérieure ;
un passage de circulation (18) permettant à l'eau de lavage drainée hors de la cuve extérieure d'être remise dans la cuve extérieure ;
une pompe (26) prévue sur le passage de circulation ;
la machine à laver est **caractérisée en ce qu'**elle comprend en outre un moyeu (50) qui est disposé entre l'embrayage à flottabilité (40) et la cuve extérieure (12), accouplé avec le deuxième arbre d'entraînement (32) pour supporter la cuve intérieure (14), disposé sous l'embrayage à flottabilité (40), et pourvu d'une pluralité de trous débouchants (54h) ; et
un guidage de passage (60) qui est disposé entre le moyeu (50) et la cuve extérieure (12) pour diriger l'eau de lavage drainée à travers les trous débouchants (54h) formés sur le moyeu vers un trou de drainage (12h) de la cuve extérieure (12), le trou de drainage étant raccordé au passage de circulation (18).

2. Machine à laver selon la revendication 1, dans laquelle le moyeu (50) est pourvu d'une barrière (51) pour stocker l'eau de lavage sous l'embrayage à flottabilité et les trous débouchants sont formés à travers un fond entouré par la barrière.

3. Machine à laver selon la revendication 1 ou 2, dans laquelle le guidage de passage (60) est pourvu d'une ouverture (61h) à travers laquelle l'arbre de transmission de puissance passe et l'ouverture est espacée de l'arbre de transmission de puissance afin de ne pas gêner l'arbre de transmission de puissance.

4. Machine à laver selon la revendication 3, dans laquelle le guidage de passage (60) possède une largeur de passage qui est réduite progressivement de l'ouverture au trou de drainage formé sur la cuve extérieure.

5. Machine à laver selon une quelconque des revendications 1 à 4, comprenant en outre une nervure (64) formée le long d'une circonférence du guidage de passage.

6. Machine à laver selon une quelconque des revendications 1 à 5, comprenant en outre un moteur (22) faisant tourner l'arbre de transmission de puissance et un dispositif de commande (10) qui commande la pompe de sorte que la pompe fonctionne pour abaisser l'embrayage à flottabilité et commande le moteur de sorte que le moteur tourne en continu dans un sens durant le fonctionnement de la pompe.

7. Machine à laver selon la revendication 6, dans laquelle le dispositif de commande (10) commande la rotation de la cuve intérieure de sorte que l'eau de lavage s'écoule le long d'un espace entre les cuves intérieure et extérieure jusqu'à un niveau plus élevé qu'une extrémité supérieure de la cuve intérieure.

8. Machine à laver selon la revendication 6, comprenant en outre une unité de détection d'entraînement (36) pour détecter un état d'entraînement du moteur, dans laquelle le dispositif de commande (10) commande le moteur de sorte que le moteur tourne de façon alternée dans les deux sens en fonction d'une valeur de détection de l'unité de détection d'entraînement durant le fonctionnement de la pompe.

9. Machine à laver selon une quelconque des revendications 1 à 8, dans laquelle les premier et deuxième arbres d'entraînement (31, 32) sont alignés de façon coaxiale et possèdent des diamètres extérieurs différents, dans laquelle l'embrayage à flottabilité (40) comprend un flotteur (41) qui se déplace vers le haut et vers le bas le long du premier arbre d'entraînement et une deuxième partie d'entrée en prise de deuxième arbre d'entraînement (42) qui entre en prise avec le deuxième arbre d'entraînement lorsque le flotteur est dans une position inférieure.

10. Procédé de commande d'une machine à laver comprenant une cuve intérieure (14), une cuve extérieure (12), un pulsateur (16), un moteur (22), une pompe (26) pour faire circuler ou drainer de l'eau de lavage, un premier arbre d'entraînement (31) pour faire tourner le pulsateur par l'intermédiaire du moteur, un deuxième arbre d'entraînement (32) pour faire tourner la cuve intérieure, et un embrayage à flottabilité (40) qui tourne d'un seul tenant avec le premier arbre d'entraînement, se déplace vers le haut et vers le bas le long du premier arbre d'entraînement par flottabilité créée par l'eau de lavage, et est en prise avec le deuxième arbre d'entraînement dans une position inférieure de l'embrayage à flottabilité pour faire tourner la cuve intérieure, le procédé est **caractérisé en ce qu'**il comprend :
la rotation alternée du moteur (22) dans les deux sens dans un état où l'eau de lavage remplit la cuve intérieure ;
l'arrêt du moteur et le drainage de l'eau de lavage sous l'embrayage à flottabilité par la pompe (26) pour déplacer l'embrayage à flottabilité jusqu'à ladite position inférieure ;
l'entraînement continu du moteur (22) dans un sens durant le fonctionnement de la pompe (26) ; et
la rotation alternée du moteur (22) dans les deux sens en fonction d'une valeur de détection d'une unité de détection d'entraînement (36) pour détecter un état d'entraînement du moteur.

11. Procédé selon la revendication 10, dans lequel le moteur (22) tourne de façon alternée dans les deux sens en fonction d'un cycle de rotation du moteur, qui est détecté par l'unité de détection d'entraînement (36).

12. Procédé selon la revendication 10, dans lequel le moteur (22) tourne de façon alternée dans les deux sens en fonction d'un régime du moteur, qui est détecté par l'unité de détection d'entraînement (36).

13. Procédé selon la revendication 10, dans lequel le moteur (22) tourne de façon alternée dans les deux sens en fonction d'une valeur de variation d'un courant de sortie du moteur, qui est détecté par l'unité de détection d'entraînement (36).

14. Procédé selon la revendication 10, dans lequel l'entraînement continu du moteur comprend la commande d'un régime du moteur de sorte que l'eau de lavage s'écoule vers le haut entre les cuves extérieure et intérieure jusqu'à un niveau plus élevé que l'extrémité supérieure de la cuve intérieure.
